Europäisches Patentamt

European Patent Office

Office européen des brevets

(19)

(11) Numéro de publication: **0 111 300**
**B1**

(12) **FASCICULE DE BREVET EUROPEEN**

(45) Date de publication du fascicule du brevet: **30.04.86**

(51) Int. Cl.⁴: **A 47 J 43/044, A 47 J 43/08**

(21) Numéro de dépôt: **83112299.9**

(22) Date de dépôt: **07.12.83**

(54) **Appareil électroménager, tel qu'un mixeur, équipé d'un accessoire batteur amovible.**

(30) Priorité: **09.12.82 FR 8220665**

(43) Date de publication de la demande:
**20.06.84 Bulletin 84/25**

(45) Mention de la délivrance du brevet:
**30.04.86 Bulletin 86/18**

(84) Etats contractants désignés:
**AT BE CH DE IT LI NL**

(56) Documents cités:
**DE-A-1 429 176**
**FR-A-1 248 592**
**FR-A-1 260 862**
**FR-A-1 303 638**
**FR-A-2 147 495**

(73) Titulaire: **MOULINEX S.A.**
**7 à 15, rue Jules-Ferry**
**F-93171 Bagnolet (FR)**

(72) Inventeur: **Brison, Marc Pierre Société**
**MOULINEX (S.A.)**
**Rue Saint-Jean des Baisants**
**F-50003 Saint-Lô (FR)**

(74) Mandataire: **May, Hans Ulrich, Dr.**
**Thierschstrasse 27**
**D-8000 München 22 (DE)**

Courier Press, Leamington Spa, England.

## Description

L'invention se rapporte aux appareils électroménagers, tel que les mixeurs, équipés d'un accessoire batteur amovible et comprenant un bloc moteur comportant un entraîneur de sortie rotatif adapté à s'accoupler avec un arbre d'entrée de l'accessoire batteur, ledit arbre d'entrée entraînant lui-même, par l'intermédiaire d'un réducteur interne à l'accessoire, un ou plusieurs fouets orientés parallèlement l'un à l'autre et transversalement à cet arbre d'entrée, ces fouets étant retenus chacun amoviblement dans l'accessoire batteur par un dispositif de retenue élastique et pouvant être éjectés de cet accessoire par action sur un bouton qui est à cet effet monté coulissant sur cet accessoire dans un plan parallèle à la direction des fouets, ledit bloc moteur et ledit accessoire portant respectivement deux manchons d'assemblage coaxiaux à l'entraîneur et à l'arbre d'entrée et munis de filets hélicoïdaux de vissage de l'un sur l'autre.

Un appareil électroménager de ce genre est décrit, par exemple, dans le brevet FR—A—1 303 638.

L'invention concerne, plus précisément, un appareil électroménager de ce genre dans lequel l'accessoire batteur comporte en outre un ergot de verrouillage assurant qu'à la fin de l'assemblage de l'accessoire sur le bloc moteur les fouets sont placés en position angulaire déterminée par rapport à ce bloc moteur, cet ergot étant monté mobile par rapport à l'un desdits manchons d'assemblage entre une position de verrouillage, pour laquelle il vient en prise avec un cran ménagé sur l'autre manchon et un emplacement angulaire choisi de ce manchon, et une position de déverrouillage, pour laquelle il est dégagé dudit cran et libère ainsi l'autre manchon.

Un tel ergot de verrouillage assurant un indexage angulaire de l'accessoire sur le bloc moteur est décrit, par exemple, dans le brevet FR—A—1 248 592.

L'invention a notamment pour but une simplification de la construction de l'ergot de verrouillage.

Dans un appareil électroménager selon l'invention, l'ergot de verrouillage est agencé dans l'accessoire batteur et est solidaire du bouton de commande d'éjection des fouets.

Ainsi un bouton unique assure la commande d'éjection des fouets et la commande du déverrouillage de l'accessoire batteur.

Les caractéristiques et avantages de l'invention ressortiront d'ailleurs de la description qui va suivre, à titre d'exemple, en référence au dessin annexé dans lequel:

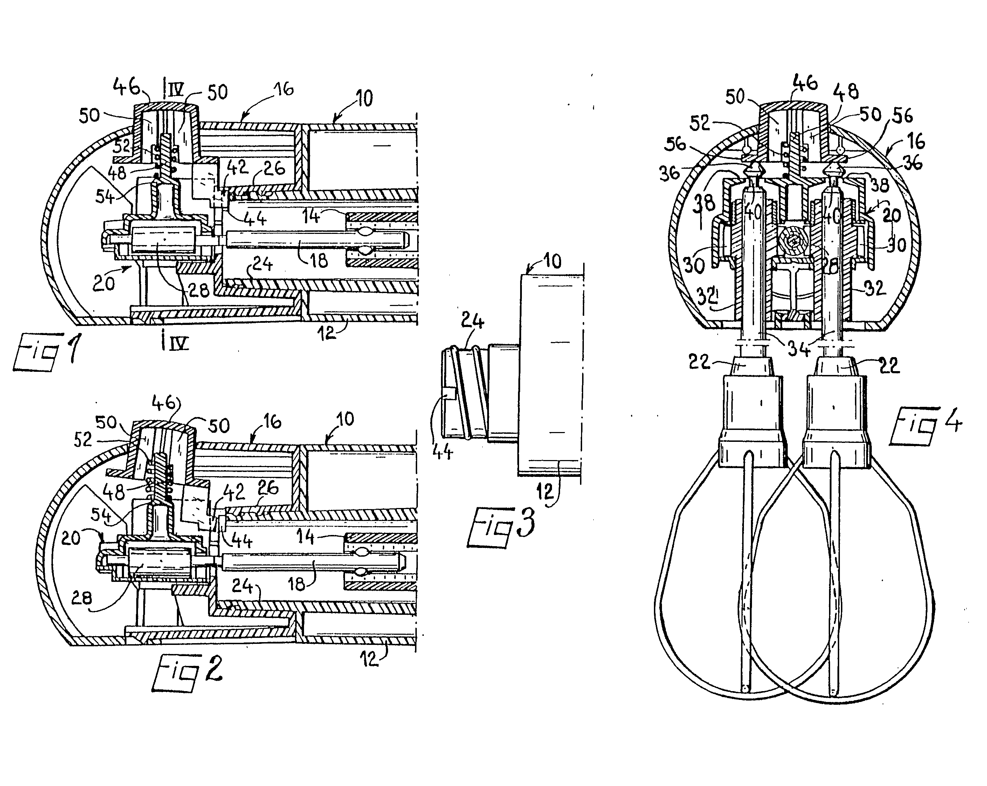

la figure 1 est une coupe longitudinale partielle d'un appareil électroménager selon l'invention, avec l'ergot en position de verrouillage, et sans les fouets de l'accessoire batteur; la figure 2 est une coupe analogue avec l'ergot en position de déverrouillage; la figure 3 représente, en vue extérieure, le manchon d'assemblage porté par le bloc moteur; la figure 4 est une coupe transversale de l'accessoire batteur selon la ligne IV—IV de la figure 1, avec les fouets montés sur cet accessoire.

L'appareil électroménager représenté partiellement en 10 aux figures 1 à 3 est, par exemple, un mixeur pour aliments du type illustré à la figure 6 du brevet français FR—A—1 303 638. Il comprend un bloc moteur 12 comportant un entraîneur de sortie rotatif 14.

Sur ce bloc moteur peuvent se monter divers accessoires amovibles et, en particulier, un accessoire batteur 16. A cet effet l'entraîneur 14 est adapté à s'accoupler avec un arbre d'entrée 18 de l'accessoire 16, lequel arbre 18 entraîne lui-même, par l'intermédiaire d'un réducteur de vitesse 20 interne à l'accessoire, deux fouets 22 orientés parallèlement l'un à l'autre et transversalement à l'arbre d'entrée 18, le bloc moteur 12 et l'accessoire 16 portant respectivement deux manchons d'assemblage 24 et 26 coaxiaux à l'entraîneur 14 et à l'arbre d'entrée 18 et munis de filets hélicoïdaux de vissage de l'un sur l'autre. Le réducteur de vitesse 20 comprend une vis sans fin 28 qui est solidaire de l'arbre 18 et qui est en prise avec deux pignons hélicoïdaux 30 portant chacun une douille 32 de réception d'une tige 34 de fouet 22. L'extrémité 36 de chaque tige 34 est retenue axialement de manière amovible dans l'accessoire batteur par un dispositif de retenue élastique constitué par des pattes radiales souples 38 pénétrant dans une gorge 40 voisine de l'extrémité 36.

Selon l'invention, l'appareil comporte un verrou qui assure qu'à la fin de l'assemblage de l'accessoire 16 sur le bloc moteur 12, les fouets 22 sont placés en position angulaire déterminée par rapport au bloc moteur 12. Ce verrou, qui est agencé dans l'accessoire batteur 16, comprend un ergot 42 monté mobile par rapport au manchon 26 entre une position de verouillage (fig. 1), pour laquelle il vient en prise avec un cran 44 ménagé sur l'autre manchon 24 en un emplacement angulaire choisi de ce manchon, et une position de déverrouillage (fig. 2), pour laquelle il est dégagé du cran 44 et libère ainsi l'autre manchon 24, permettant une rotation relative des deux manchons en vue d'un dévissage. Comme on le voit bien sur la figure 3, le cran 44 est constitué par une encoche pratiquée dans le bord d'extrémité du manchon 24.

Le mouvement de l'ergot 42 vers sa position de déverrouillage est commandé par un bouton 46 monté mobile sur l'accessoire 16 et solidaire de l'ergot 42. Ce bouton 46 présente la forme d'un chapeau qui vient coiffer l'extrémité d'un pivot 48 interne à l'accessoire 16 et qui porte en son intérieur des nervures de guidage 50 dirigées vers le pivot 48. Ce bouton 46 est rappelé élastiquement vers sa position d'extraction (fig. 1) par un ressort hélicoïdal 52 enfilé sur le pivot 48 et disposé entre la base 54 du pivot et la région inférieure des nervures 50.

On notera qu'entre le pivot 48 et les nervures de guidage 50 on a laissé un jeu suffisant pour autoriser, à l'encontre du ressort 52, non seulement un mouvement de coulissement du bouton 46 sur le pivot 48, mais encore un mouvement de pivotement de ce bouton (fig. 2) autour d'un axe perpendiculaire à l'arbre 18 et dans un plan parallèle à la direction des fouets 22 et passant par l'axe commun à l'arbre 18 et au manchon 26. Ce mouvement de pivotement entraîne, comme on le comprend, le déverrouillage de l'ergot 42, tandis que le mouvement de coulissement, à condition qu'il soit d'amplitude suffisante et accompagné d'un effort suffisant de la part de l'usager, entraîne l'éjection des fouets hors de leur dispositif de retenue 38: à cet effet, le bouton 46 est muni de deux pattes de poussée 56 qui viennent respectivement en prise avec les extrémités 36 des tiges des fouets 22. Ainsi, le bouton 46 de commande de l'ergot 42 constitue en même temps un bouton d'éjection des fouets de l'accessoire batteur.

On notera que, lors du mouvement d'assemblage de l'accessoire 16 sur le bloc moteur 12, c'est-à-dire à la fin du vissage des deux manchons 26 et 24 l'un sur l'autre, l'ergot 42 pénètre de lui-même dans le cran 44 sous l'effet du ressort 52 de rappel du bouton 46. Ensuite, pendant l'utilisation de l'accessoire batteur, la position angulaire des fouets 22 par rapport au bloc moteur 10 reste bien définie tant que l'usager n'exerce aucune action sur le bouton 46.

**Revendications**

1. Appareil électroménager, tel qu'un mixeur, équipé d'un accessoire batteur amovible (16) et comprenant un bloc moteur (12) comportant un entraîeur de sortie rotatif (14) adapté à s'accoupler avec un arbre d'entrée (18) de l'accessoire batteur, ledit arbre d'entrée (18) entraînant lui-même, par l'intermédiaire d'un réducteur (20) interne à l'accessoire (16), un ou plusieurs fouets (22) orientés parallèlement l'un à l'autre et transversalement à cet arbre d'entrée, ces fouets (22) étant retenus chacun amoviblement dans l'accessoire batteur (16) par un dispositif de retenu élastique (38) et pouvant être éjectés de cet accessoire par action sur un bouton (46) qui est à cet effet monté coulissant sur cet accessoire dans un plan parallèle à la direction des fouets (22), ledit bloc moteur (12) et ledit accessoire (16) portant respectivement deux manchons d'assemblage (24 et 26) coaxiaux à l'entraîneur (14) et à l'arbre d'entrée (18) et munis de filets hélicoïdaux de vissage de l'un sur l'autre, caractérisé en ce que l'accessoire (16) comporte en outre un ergot de verrouillage (42) assurant qu'à la fin de l'assemblage les fouets (22) sont placés en position angulaire déterminée par rapport au bloc moteur (12), cet ergot (42) étant monté mobile par rapport à l'un (26) desdits manchons entre une position de verrouillage, pour laquelle il vient en prise avec un cran (44) ménagé sur l'autre manchon (24) en un emplacement angulaire choisi de ce manchon, et une position de déverrouillage, pour laquelle il est dégagé dudit cran (44) et libère ainsi l'autre manchon (24), l'ergot de verrouillage (42) étant agencé dans l'accessoire (16) et étant solidaire du bouton (46) de commande d'éjection des fouets (22).

2. Appareil électroménager selon la revendication 1, caractérisé en ce que, le cran (44) étant constitué par une encoche pratiquée dans le bord d'extrémité du manchon (24) porté par le bloc moteur (12), et le plan de coulissement du bouton (46) étant un plan passant par l'axe du manchon (26) porté par l'accessoire batteur (16), le bouton (46) est monté pour pouvoir aussi pivoter dans ce plan avec son ergot (42) autour d'un axe perpendiculaire à l'axe du manchon (26) de l'accessoire (16) en vue du déverrouillage de l'ergot (42) hors de l'encoche (44).

3. Appareil électroménager selon la revendication 2, caractérisé en ce que le bouton de commande (46) présente la forme d'un chapeau qui vient coiffer l'extrémité d'un pivot (48) interne à l'accessoire batteur (16) et qui porte en son intérieur des nervures de guidage (50) dirigées vers ce pivot, un jeu suffisant étant laissé entre ce pivot (48) et ces nervures (50) pour autoriser, non seulement le coulissement du chapeau (46) par rapport au pivot (48) en vue de l'éjection des fouets (22), mais aussi son mouvement de pivotement en vue du déverrouillage, un ressort hélicoïdal (52) de rappel du bouton (46) étant enfilé sur le pivot (48) et disposé entre la base (54) du pivot et la région inférieure desdites nervures (50).

4. Appareil électroménager selon l'une quelconque des revendications précédentes, caractérisé en ce que le bouton (46) porte, en vue de l'éjection des fouets, une paire de pattes de poussée (56) venant chacune en prise avec la tige (36) d'un fouet (22).

**Patentansprüche**

1. Elektrisches Haushaltsgerät, wie etwa ein Mixer, mit einem abnehmbaren Rührwerkansatz (16) und einem Motorblock (12), der am Ausgang einen drehbaren Mitnehmer (14) aufweist der mit einer Eingangswelle (18) des Rührwerkansatzes kuppelbar ist, wobei die Eingangswelle (18) ihrerseits über ein im Ansatzgerät (16) untergebrachtes Untersetzungsgetriebe (20) einen oder mehrere parallel zueinander und quer zu dieser Eingangswelle gerichtete Rührer (22) antreibt, die jeder im Rührwerkansatz (16) durch eine elastische Haltevorrichtung (38) abnehmbar gehalten sind und aus diesem Ansatzgerät durch Einwirkung auf einen Knopf (46) ausgeworfen werden können, der zu diesem Zweck an diesem Ansatzgerät in einer zur Richtung der Rührer (22) parallelen Ebene veschiebbar gehalten ist, wobei der Motorblock (12) und das Ansatzgerät (16) jeweils zwei zum Mitnehmer (14) und der Eingangswelle (18) koaxiale und mit Schraubengewinden zum Verschrauben aneinander versehene Verbindungsmuffen (24) und (26) tragen, dadurch gekennzeichnet, daß das Ansatzgerät (16) außerdem eine Verriegelungsnase (42) ausweist die gewährleistet, daß sich bei Beenidung des Anbringens des Ansatzgeräts die Rührer (22) in einer bestimmten Winkelstellung bezüglich des Motorblocks (12) befinden, wobei diese Nase (42) bezüglich der einen (26) dieser Muffen zwischen einer Verriegelungsstellung, in der sie mit einer an der anderen Muffe (24) in einer bestimmten Winkelstellung derselben ausgebildeten Rastkerbe (44) in Eingriff kommt, und einer Entriegelungsstellung, in der sie von der Kerbe (44) frei ist und so die andere Muffe (24) freigibt, beweglich gehalten ist, wobei die Verriegelungsnase (42) im Ansatzgerät (16) angeordnet und mit dem Knopf (46) zur Betätigung des Auswerfens der Rührer (22) fest verbunden ist.

2. Elektrisches Haushaltsgerät nach Anspruch 1, dadurch gekennzeichnet, daß die Kerbe (44) von einer im äußeren Rand der vom Motorblock (12) getragenen Muffe (24) ausgebildeten Aussparung gebildet wird und die Verschiebungsebene des Knopfes (46) eine durch die Achse der vom Rührwerkansatz (16) getragenen Muffe (26) gehende Ebene ist, wobei dieser Knopf (46) so gehalten ist, daß er auch in dieser Ebene mit seiner Nase (42) um eine zur Achse der Muffe (26) des Ansatzgeräts (16) senkrechte Achse schwenkbar ist, um die Nase (42) aus der Aussparung (44) zu entriegeln.

3. Elektrisches Haushaltsgerät nach Anspruch 2, dadurch gekennzeichnet, daß der Betätigungsknopf (46) die Form einer Kappe hat, welche das Ende eines im Rührwerkansatz (16) angeordneten Zapfens (48) übergreift und an ihrer Innenseite auf diesen Zapfen hin gerichtete Führungsrippen (50) trägt, wobei zwischen diesem Zapfen (48) und diesen Führungsrippen (50) ein genügendes Spiel gelassen ist, damit die Kappe (46) nicht nur bezüglich des Zapfens (48) zwecks Auswerfens der Rührer (22) verschiebbar ist, sondern auch eine Schwenkbewegung zum Entriegeln ausführen kann, wobei eine Schraubenfeder (52) zum Rückstellen des Knopfes (46) über den Zapfen (48) geschoben und zwischen der Basis (54) des Zapfens und dem unteren Bereich der Rippen (50) angeordnet ist.

4. Elektrisches Haushaltsgerät nach einem der vorange henden Ansprüche, dadurch gekennzeichnet, daß der Knopf (46) zum Auswerfen der Rührer ein Paar von Druckfüßen (56) trägt, die jeder auf die Stange (36) eines Rührers (22) einwirken.

**Claims**

1. An electrical household appliance such as a mixer, comprising a detachable stirrer attachment (16) and a motor block (12) having at the output thereof a rotatable driver (14) adapted to be coupled to an input shaft (18) of said stirrer attachment, wherein the input shaft (18) in turn drives one or several stirrers (22) via a reducing gear (20) housed in said attachment device (16), said stirrers extending parallel to each other and transversely to said input shaft, each of said stirrers being detachably retained in said stirrer attachment (16) by an elastic retaining means (38) and being ejectable from said attachment device by actuation of a button (46) which for this purpose is held on said attachment device for movement in a plane parallel to the direction of the stirrers (22), wherein each of said motor block (12) and said attachment device (16) carries two coupling sleeves (24) and (26) disposed coaxially to said driver (14) and to said input shaft (18) and provided with threaded portions for threaded interengagement, characterised in that said attachment device (16) furthermore comprises a locking projection (42) which ensures that when the mounting of the attachment device has been completed said stirrers (22) will have a predetermined angular position relative to said motor block (12), wherein said projection (42) is held relative to one (26) of said sleeves for movement between a locking position, in which it is engaged in a latching notch (44) formed in said other sleeve (24) in a predetermined angular position, and an unlocked position in which it is free from said notch (44) to thereby release said other sleeve (24), wherein said locking projection (42) is disposed in said attachment device (16) and is fixedly joined to said button (46) for actuation of the stirrer (22) ejection operation.

2. An electrical household appliance as claimed in claim 1, characterized in that said notch (44) is formed by a recess formed in the outer periphery of the sleeve (24) supported by the motor block (12), and the plane of movement of said button (46) is a plane extending through the axis of the sleeve (26) supported by the stirrer attachment (16), wherein said button (46) is held in such a way that it is pivotable also in this plane with its projection (42) about an axis vertical to the axis of the sleeve (26) of the attachment device (16) to thereby release said projection (42) from said recess (44).

3. An electrical household appliance as claimed in claim 2, characterised in that said actuation button (46) is shaped like a cap which overlaps the end of a pin (48) disposed in said stirrer attachment (16) and is provided on the inside thereof with guide ridges (50) directed towards said pin, wherein sufficient clearance is maintained between said pin (48) and said guide ridges (50) so that the cap (46) will be movable not only relative to said pin (48) for ejection of said stirrers (22) but may also perform a pivoting movement for unlocking, wherein a coil spring (52) for resetting said button (46) is pushed over said pin (48) and is disposed intermediate the base (54) of said pin and the bottom portion of said ridges (50).

4. An electrical household appliance as claimed in any of the preceding claims, characterised in that said button (46) carries a pair of pushing lugs (56) for ejecting the stirrers, each of said pushing lugs acting on the rod (36) of a respective stirrer (22).

Fig 1

Fig 2

Fig 3

Fig 4

1